Europäisches Patentamt

European Patent Office

Office européen des brevets

(19)

(11) Veröffentlichungsnummer: **0 313 831**
**A1**

## EUROPÄISCHE PATENTANMELDUNG

(21) Anmeldenummer: 88115752.3

(22) Anmeldetag: 24.09.88

(51) Int. Cl.4: **A01G 9/14**

(30) Priorität: 28.09.87 DE 8713044 U

(43) Veröffentlichungstag der Anmeldung:
03.05.89 Patentblatt 89/18

(84) Benannte Vertragsstaaten:
**AT BE CH DE ES FR GB GR IT LI LU NL SE**

(71) Anmelder: **Diwald, Hans**
**Freiheitstr. 45**
**D-7700 Singen(DE)**

(72) Erfinder: **Diwald, Hans**
**Freiheitstr. 45**
**D-7700 Singen(DE)**

(74) Vertreter: **Weiss, Peter et al**
**Schlachthausstrasse 1 Postfach 466**
**D-7700 Singen a.H.(DE)**

(54) **Dachhaut.**

(57) Eine Dachhaut besteht aus Tragprofilen (6) und Folienstreifen oder entsprechenden Plattenelementen und ist insbesondere für Gewächshäuser, Industriehallen od. dgl. geeignet. Dabei weist das Tragprofil (6) zwei Seitenwände (14, 15) auf, denen von entsprechenden Leisten (23) gebildete Halteelemente (26) für innere Folienstreifen (9) bzw. Innenplatten (41) angeformt sind. Beide Seitenwände (14,15) sind über einen Dachstreifen (17) miteinander verbunden, welcher eine Aufnahmenut (18) für äußere Folienstreifen (19) bzw. Dachplatten (43) aufweist.

EP 0 313 831 A1

## Dachhaut

Die Erfindung betrifft eine Dachhaut aus Tragprofilen und Folienstreifen oder entsprechenden Plattenelementen, insbesondere für Gewächshäuser, Industriehallen od. dgl..

Gewächshäuser werden üblicherweise entweder aus Glas oder aus durchsichtiger Kunststoff-Folie gebildet. In beiden Fällen dienen in der Regel besonders geformte Tragprofile als Stützgerüst. Beispielsweise ist aus der Europäischen Patentanmeldung 106 899 ein Gewächshaus aus Kunststoff-Folie bekannt, bei dem durch ein Tragprofil sowohl eine Dachhaut wie auch eine Innenhaut gehalten wird. Die Festlegung der Innenhaut geschieht über in Kanälen des Tragprofils eingelegt Drähte, welche verspannt werden.

Hierzu wird die Innenhaut um den Draht gelegt und ihre freie Randkante aus dem Kanal herausgezogen und von Hand gespannt bzw. nachgespannt. Diese Befestigungs ist kompliziert und zeitaufwendig. Zudem hängen die freien Randbereiche der Innenhautstreifen als Lappen in den Innenraum des Gewächshauses, was sehr unansehnlich ist.

Zur Beseitigung dieser Nachteile schlägt das Deutsche Gebrauchsmuster G 86 22 404.2 vor, daß seitlich an den Kanälen durch Profilstreifen eine Nut ausgebildet ist, welche einen dem Folienstreifen seitlich angeformten Keder aufnimmt. Hierdurch wird zwar die Innenhaut wesentlich schneller und besser verspannt, die Dachhaut wird jedoch nach wie vor über das Profil gelegt und findet ihre Befestigung lediglich an den Stirnwänden des Gewächshauses und jeweils einer an der Seitenwand angeordneten Dachrinne. Dies verbietet eine Baukastenbauweise und beeinflußt die Stabilität des Gewächshauses negativ.

Der Erfinder hat sich zum Ziel gesetzt, eine Dachhaut aus Tragprofilen zu entwickeln, bei der die Tragprofile sowohl der Festlegung der Innenhaut als auch der Dachhaut dienen und diese Tragprofile nicht nur für Gewächshäuser, sondern auch für Bauwerke mit einer Dachhaut aus festen Materialien Anwendung finden können.

Zur Lösung dieser Aufgabe führt, daß das Tragprofil aus zwei Seitenwänden besteht, denen von entsprechenden Leisten gebildeten Haltenute für innere Folienstreifen bzw. Innenplatten angeformt sind, und daß die beiden Seitenwände über einen Dachstreifen miteinander verbunden sind, welcher eine Aufnahmenut für äußere Folienstreifen bzw. Dachplatten aufweist.

Dies bedeutet, daß das Tragprofil zum einen die inneren Folienstreifen in der Haltenut und die äußeren Folienstreifen in der Aufnahmenut hält. Diese Ausbildung des Tragprofils gestattet den Aufbau von Gewächshäusern, Industriehallen od. dgl. im Baukastensystem. Je nach Wunsch können eine Vielzahl von Tragprofilen nacheinander angeordnet werden und später durch weitere Tragprofile erweitert werden. Es brauchen dann nur folgende Tragprofile errichtet und die entsprechenden Folienstreifen in die Haltenuten bzw. Aufnahmenuten eingezogen werden.

Das gleiche gilt natürlich nicht nur für Folienstreifen, sondern auch für feste Werkstoffe, aus denen beispielsweise Dachplatten hergestellt sein können. Auf diese Weise können insbesondere Industriehallen beispielsweise in Leichtbauweise hergestellt werden.

Die Leisten für die Haltenut können einmal L-förmig ausgebildet sein, wobei zwei Leisten miteinander einen Aufnahmeschlitz für einen Folienstreifen oder eine Innenplatte bilden, der bzw. die mit einem Randkeder bzw. einem verdickten Randbereich in die Haltenut eingreift. Beim Errichten des Daches wird somit der Folienstreifen bzw. die Innenplatte einfach in diese Haltenut mit ihrem Keder bzw. dem verdickten Randbereich eingeschoben, was die Arbeitszeit für die Errichtung des Daches erheblich vermindert.

Insbesondere für einen Randkeder an Kunststoffleisten dürfte es sich als günstig erweisen, wenn die Leisten eine rohrförmige Haltenut ausbilden. Hierdurch werden auch Beschädigungen durch zu scharfe Kanten an der Kunststoff-Folie vermieden.

Auch für den äußeren Folienstreifen ist randseitig eine Art Keder vorgesehen, wobei hier beispielsweise ein Randbereich einfach umgeschlagen und unter Ausbildung einer Einschuböffnung verschweißt werden kann. In diese Randöffnung kann dann ein Spannelement eingelegt werden, welches beispielsweise ein Draht ist. Danach wird der äußere Folienstreifen mit diesem Randbereich in die Aufnahmenut eingelegt und der Draht angezogen. Ein späteres Nachspannen geschieht der Einfachheit halber durch weiteres Anziehen des Spannelementes.

Zur Verkeilung des Folienstreifens in der Aufnahmenut ist erfindungsgemäß ein Gummiseil vorgesehen. Liegen beispielsweise zwei Folienstreifen in der Aufnahmenut, so bilden sie zum Ausgang der Aufnahmenut hin eine flaschenhalsartige Öffnung. Zum Einlegen des Gummiseils in diese Öffnung wird das Gummiseil auseinandergezogen, so daß sich sein Durchmesser erheblich vermindert. Der Durchmesser muß sich soweit vermindern, daß ein Einschieben in diese Öffnung möglich ist.

Beim Lösen des Zuges erhöht sich der Durchmesser des Gummiseils wiederum erheblich und verkeilt die beiden Folienstreifen. Auf diese einfache Art und Weise werden die äußeren Folienstreifen schnell und sauber in der Aufnahmenut festgelegt.

Werden anstelle von Folienstreifen entsprechende Dachplatten mit dem Tragprofil verbunden, so können diese Dachplatten beispielsweise eine S-förmig gekrümmte Randleiste aufweisen. Dabei entspricht die Kontur der Randleiste in etwa der Innenkontur der Aufnahmenut.

Dabei ist es möglich, daß beispielsweise zwei benachbarte Dachplatten so zugeschnitten sind, daß sie mit ihren Rändern etwa in der Achse der Aufnahmenut aneinanderstoßen. Bei Paßungenauigkeiten können hier jedoch Probleme auftreten. Um diese zu beseitigen, können die beiden Randleisten zweier benachbarter Dachplatten im Verhältnis zueinander unterschiedlich lang ausgebildet sein, so daß die eine Dachplatte die andere teilweise übergreifen kann.

Zum Festlegen dieser Dachplatten in der Aufnahmenut hat sich ebenfalls das oben genannte Gummiseil als sehr günstig erwiesen.

Wie oben angedeutet, geschieht das Spannen der äußeren Folienstreifen in der Regel über die Spannelemente. Für das Spannen der inneren Folienstreifen ist dagegen ein gesondertes Klemmelement vorgesehen, welches die beiden Seitenwände des Tragprofils angreift und deren Abstand zueinander verändern kann. Der Einfachheit halber sind diese Klemmelemente ähnlich wie eine Schraubzwinge ausgeformt. Damit die entsprechenden Klemmschenkel nicht abrutschen können, ist an den Seitenwänden ein entsprechendes Auflager vorgesehen.

Zur Verbindung der einzelnen Tragprofile untereinander sind zusätzliche Querstreben vorgesehen. Damit diese Querstreben schnell und einfach mit den Tragprofilen verbunden werden können, sind in den Tragprofilen entsprechende U-Profile vorgesehen.

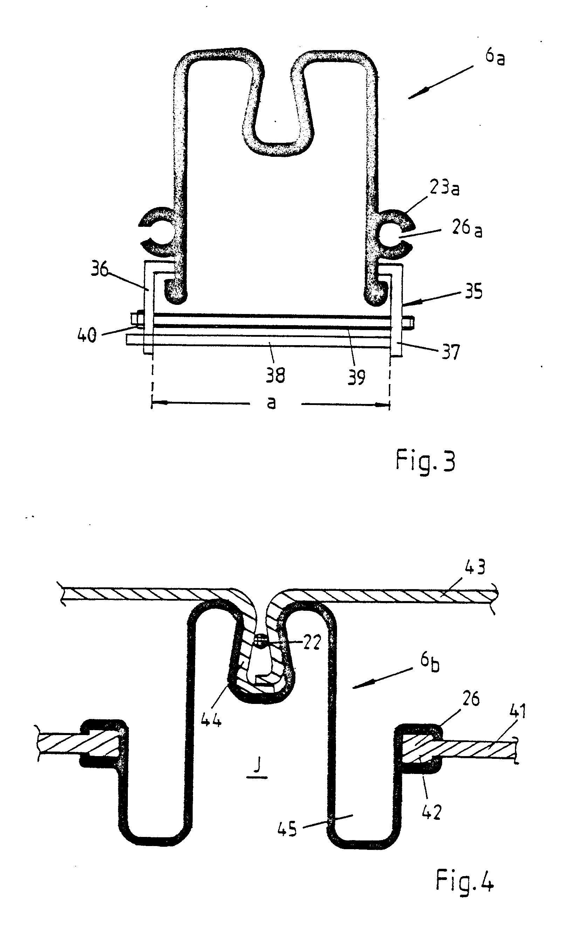

Kernstück der vorliegenden Erfindung ist somit das Tragprofil. Dieses ist äußerst funktionell geformt, wobei der Erfinder durch Ausbildung zusätzlicher Profilstreifen (siehe Fig. 4 der Figurenbeschreibung) etwaige Paßungenauigkeiten soweit wie möglich ausgeglichen hat.

Weitere Vorteile, Merkmale und Einzelheiten dere Erfindung ergeben sich aus der nachfolgenden Beschreibung eines bevorzugten Ausführungsbeispiels sowie anhand der Zeichnung; diese zeigt in

Fig. 1 einen schematisch dargestellten Querschnitt durch ein Gewächshaus;

Fig. 2 einen vergrößert dargestellten Querschnitt durch das Dach des Gewächshauses nach Fig. 1 entlang Linie II-II;

Fig. 3 einen Querschnitt entsprechend Fig. 2 in einer anderen Ausführungsform;

Fig. 4 einen Querschnitt entsprechend Fig. 2 in einem weiteren Anwendungsbeispiel.

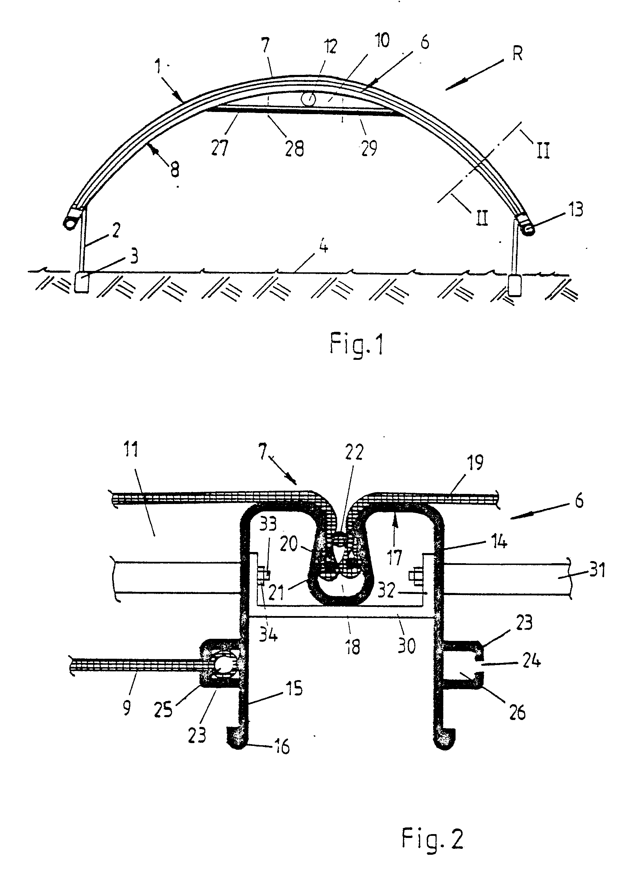

Ein Gewächshaus R besteht gemäß Fig. 1 aus einem Dach 1, welches von Seitenstreben 2 gehalten wird, die mit einem Betonsockel 3 in einem Boden 4 verankert sind.

Das Dach 1 besteht im wesentlichen aus in der Längsrichtung des Gewächshauses R versetzt angeordneten Tragprofilen 6, welche im vorliegenden Ausführungsbeispiel dem Gewächshaus R eine kuppelförmige Gestalt geben. Ebenso ist jedoch auch eine giebelförmige Gestaltung möglich. Die Tragprofile 6 sind in den Fig. 2-4 näher dargestellt. Sie werden von einer äußeren Dachhaut 7, beispielsweise einer Kunststoff-Folie überspannt, welche das gesamte Gewächshaus R gegen äußere Witterungseinflüsse schützt.

Im Inneren sind als Innenhaut 8 Folienstreifen 9 vorgesehen, welche nebeneinanderliegende Tragprofile 6 verbinden.

Im oberen Bereich des kuppelförmigen Daches 1 ist diese Verbindung zwischen Folienstreifen 9 und Tragprofilen 6 jedoch aufgelöst, so daß sich ein Schacht 10 ausbildet, der beispielsweise der Lüftung des Raumes 11 zwischen Dachhaut 7 und Folienstreifen 9 dient. Der offene Spalt zwischen zwei Folienstreifen 9 im Bereich des Tragprofils 6 wird durch eine Abdeckleiste 27, vorzugsweise aus Aluminium, abgedichtet. Diese Abdeckleiste 27 kann mittels Befestigungselementen 28 mit einer Gegenleiste 29 verbunden sein, wobei jeweils die Ränder von angrenzenden Folienstreifen 9 eingeklemmt werden.

In diesem Schacht 10 kann auch eine Belüftungs-und/oder eine Wasserleitung 12 angeordnet werden, über die Wasser bzw. Luft in den Raum 11 eingebracht wird. Hierdurch kann im Sommer durch Einbringen von beispielsweise kaltem Wasser eine Kühlung und im Winter durch Einbringen von warmem Wasser eine Erwärmung des Daches 1 bzw. des Gewächshauses R erfolgen. Durch diese Maßnahme entfällt auch eine gesonderte Anordnung von seitlichen Luftrohren, mit denen Warm- bzw. Kaltluft in den Raum 11 eingeführt wurde. Beispielsweise können einfach von der Leitung 12 Zweigleitungen in den Raum 11 auf die Folienstreifen 9 gelegt werden, so daß das Wasser über diese Folienstreifen 9 rieselt. Anstelle dieser seitlichen Luftrohre wird eine Wasserrinne 13 vorgesehen, über welche die Dachhaut 7 gezogen und unterhalb der Wasserrinne 13 an den Seitenstreben 2 mit nicht näher dargestellten verstellbaren Spannungshebeln befestigt wird.

Nach Fig. 2 weist das Tragprofil 6 einen M-förmigen Querschnitt auf. Dabei sind zwei Seitenwände 14 und 15 etwa parallel zueinander angeordnet, wobei beide Seitenwände 14 und 15 jeweils mit einer Verdickung als Auflager 16 beginnen. Die Aufgabe dieses Auflagers 16 wird weiter unten beschrieben.

Beide Seitenwände 14 und 15 sind durch einen Dachstreifen miteinander verbunden, wobei dieser Dachstreifen eine Aufnahmenut 18 für Teile der Dachhaut 7 ausbildet. Somit besteht in diesem Ausführungsbeispiel, anders als beispielsweise nach dem Deutschen Gebrauchsmuster G 86 22 404.2, die Dachhaut 7 nicht aus einer durchgehenden Kunststoff-Folie, sondern ebenfalls aus Folienstreifen 19. Randseitig ist jeder Folienstreifen 19 eingeschlagen und bildet so eine Randöffnung 20 zur Aufnahme eines Spannseiles, -drahtes od. dgl. 21. Mit diesem Spannelement 21 wird der Folienstreifen 19 in die Aufnahmenut eingelegt und dann durch Anziehen dieses Spannelementes 21 geglättet. Damit entsteht wiederum eine durchgehende Dachhaut 7.

Zur besseren Halterung beispielsweise zweier Folienstreifen 19 wird zwischen zwei Folienstreifen 19 in einer Aufnahmenut 18 ein Gummiseil 22 eingelegt. Beim Einlegen wird dieses Gummiseil 22 stark gespannt, so daß sein Durchmesser sehr gering ist. Damit kann dieses Gummiseil 22 leicht zwischen zwei Folienstreifen 19 eingleiten. Wird der Zug auf das Gummiseil 22 gelöst, so erhöht sich der Durchmesser dieses Gummiseils 22 und klemmt die beiden Folienstreifen 19 gegen die Innenwand der Aufnahmenut 18.

Von außen her sind jeder Seitenwand 14 bzw. 15 zwei zueinander geneigte L-förmige Leisten 23 angeformt. Jeweils zwei L-förmige Leisten 23 bilden zusammen einen Aufnahmeschlitz 24. In diesen Aufnahmeschlitz 24 wird jeweils ein Folienstreifen 9 eingezogen, wobei jeder Folienstreifen 9 einen Randkeder 25 besitzt. Dieser Randkeder 25 verhindert ein Herausgleiten des Folienstreifens 9 aus der von jeweils zwei L-förmigen Leisten 23 gebildeten Haltenut 26.

Im Inneren des Tragprofils 6 ist ferner ein U-Profil 30 zu erkennen, welches von beiden Seiten her an die Innenwand jeder Seitenwand 14 bzw. 15 anschlägt. Dieses U-Profil 30 dient der Festlegung von Querstreben 31, mit denen die einzelnen Tragprofile 6 untereinander verbunden sind. Hierzu kann beispielsweise eine Querstrebe 31 die Seitenwand 14 und einen Schenkel 32 des U-Profils 30 mit einem Gewindebolzen 33 durchsetzen. Die Festlegung des Gewindebolzens 33 geschieht dann mittels einer Mutter 34.

Im Ausführungsbeispiel eines Querprofils 6a nach Fig. 3 sind die Leisten 23a so ausgebildet, daß sie eine rohrförmige Haltenut 26a für den Randkeder 25 ausbilden. Hierdurch wird ein Einführen des Randkeders bzw. des Folienstreifens 9 erleichtert.

Ferner ist in Fig. 3 ein Klemmelement 35 gezeigt, welches aus zwei Klemmschenkeln 36 und 37 besteht, die über eine Führungsstange 38 gegeneinander verschiebbar miteinander verbunden sind. Ferner ist in den einen Klemmschenkel 37 eine Gewindespindel 39 eingesetzt, welche den anderen Klemmschenkel 36 durchsetzt.

Auf die Gewindespindel 39 ist eine Mutter od. dgl. 40 aufgesetzt, mit der der Abstand a beider Schenkel zueinander verändert werden kann. Bei Verringerung des Abstandes a verringert sich auch der Abstand zwischen den sich gegenüberliegenden Haltenuten 26a, wobei die in den Haltenuten 26a befindlichen Folienstreifen 9 gespannt werden.

Das Ausführungsbeispiel eines Tragprofils 6b gemäß Fig. 4 ähnelt mehr demjenigen des Deutschen Gebrauchsmusters G 86 22 404.2. Die folgenden Ausführungen gelten aber genauso für eine Verwendung der Tragprofile nach Fig. 2 bzw. 3 in einem Anwendungsbeispiel nach Fig. 4. Es hat sich nämlich in der Praxis gezeigt, daß die erfindungsgemäßen Tragprofile 6 in der hier gezeigten Ausführungsform nicht nur sehr gut für Gewächshäuser bzw. für das Verbinden von Folienstreifen geeignet sind, sondern auch grundsätzlich als Dachträger dienen können. So ist es sehr einfach möglich, anstelle der Folienstreifen 9 mit ihren Randkedern 25 entsprechende Innenplatten 41 mit verdickten Randbereichen 42 in die entsprechende Haltenut 26 einzuschieben. In diesem Ausführungsbeispiel nach Fig. 4 dient der von dem Tragprofil 6b ausgebildete Randkanal 45 nicht zur Aufnahme von Wasser od. dgl., sondern durch ihn können beispielsweise Paßungenauigkeiten der Innenplatten 41 sehr leicht ausgeglichen werden. Bei Paßungenauigkeiten wird einfach der vom Profil 6b gebildete Innenraum I mehr oder weniger aufgeweitet oder verengt.

Anstelle der Folienstreifen für eine Dachhaut sind hier Dachplatten 43 vorgesehen, welche randseitig S-förmig abgekrümmt sind und mit dieser S-förmigen Randleiste 44 in die Aufnahmenut 18 eingreifen. Wie in dem Ausführungsbeispiel nach Fig. 4 gezeigt, kann eine Randleiste 44 länger als die andere der benachbarten Dachplatte 43 sein, so daß sie in der Aufnahmenut 18 übereinander liegen und sich gegeneinander abstützen.

Auch zur klemmenden Halterung der Dachplatten 43 kann der Einfachheit halber ein Gummiseil 22 vorgesehen sein, welches, wie oben beschrieben, in die Aufnahmenut bzw. zwischen zwei Dachplatten 43 eingesetzt wird.

Auf dieses Weise ist es möglich, beispielsweise für Industriehallen auf sehr einfache Art und Weise eine Dachhaut zu bilden, wobei selbstverständlich zwischen den Innenplatten 41 und den Dachplatten 43 entsprechende Isoliermaterialien eingelegt werden können.

Der wesentliche Vorteil dieses erfindungsgemäßen Tragprofils 6 besteht darin, daß sowohl bei seiner Verwendung zur Bildung eines Gewächshauses wie auch zur Erstellung einer Dachhaut mit festen Platten ein baukastenähnliches System verfolgt werden kann. Je nach Wunsch, Zeit bzw. Geld kann an bestehende Gewächshäuser bzw. Dächer mit dem erfindungsgemäßen Tragprofil ein weiteres Tragprofil angeschlossen werden und somit eine Vergrößerung des Gewächshauses bzw. der beispielsweise so gebildeten Industriehalle vorgenommen werden.

Ansprüche

1. Dachhaut aus Tragprofilen und Folienstreifen oder entsprechenden Plattenelementen, insbesondere für Gewächshäuser, Industriehallen od. dgl., dadurch gekennzeichnet, daß das Tragprofil (6) aus zwei Seitenwänden (14,15) besteht, denen von entsprechenden Leisten (23) gebildete Halteelemente (26) für innere Folienstreifen (9) bzw. Innenplatten (41) angeformt sind, und daß die beiden Seitenwände (14,15) über einen Dachstreifen (17) miteinander verbunden sind, welcher eine Aufnahmenut (18) für äußere Folienstreifen (19) bzw. Dachplatten (43) aufweist.

2. Dachhaut nach Anspruch 1, dadurch gekennzeichnet, daß die Leisten (23) L-förmig ausgebildet sind und miteinander einen Aufnahmeschlitz (24) für einen Folienstreifen (9) oder eine Innenplatte (41) bilden, der bzw. die mit einem Randkeder (25) bzw. einem verdickten Randbereich (42) in die Haltenut (26) eingreift.

3. Dachhaut nach Anspruch 1, dadurch gekennzeichnet, daß die Leisten (23a) eine rohrförmige Haltenut (26a) für einen Randkeder (25) bzw. einen verdickten Randbereich (42) eines Folienstreifens (9) bzw. einer Innenplatte (41) ausbilden.

4. Dachhaut nach einem der Ansprüche 1 bis 3, dadurch gekennzeichnet, daß die äußeren Folienstreifen (19) randseitig unter Ausbildung einer Randöffnung (20) umgeschlagen sind, wobei in diese Randöffnung (20) ein Spannelement (21) eingelegt ist, welches den Folienstreifen (19) in die Aufnahmenut (18) einzieht.

5. Dachhaut nach Anspruch 4, dadurch gekennzeichnet, daß in der Aufnahmenut (18) zwischen zwei Folienstreifen (19) ein Gummiseil (22) eingelegt ist.

6. Dachhaut nach einem der Ansprüche 1 bis 3, dadurch gekennzeichnet, daß eine Dachplatte (43) mit einer S-förmig gekrümmten Randleiste (44) in die Aufnahmenut (18) eingreift.

7. Dachhaut nach Anspruch 6, dadurch gekennzeichnet, daß die S-förmig gekrümmten Randleisten (44) zweier benachbarter Dachplatten (43) im Verhältnis zueinander unterschiedlich lang ausgebildet sind.

8. Dachhaut nach Anspruch 6 oder 7, dadurch gekennzeichnet, daß zwischen zwei Dachplatten (43) in die Aufnahmenut (18) ein Gummiseil (22) eingelegt ist.

9. Dachhaut nach wenigstens einem der Ansprüche 1 bis 8, dadurch gekennzeichnet, daß die Seitenwände (14,15) ein Auflager (16) für ein Klemmelement (35) bilden.

10. Dachhaut nach Anspruch 9, dadurch gekennzeichnet, daß das Klemmelement (35) aus zwei Klemmschenkeln (36,37) besteht, welche über eine Führungsstange (38) und Gewindespindel (39) miteinander verbunden sind und deren Abstand (a) zueinander veränderbar ist.

11. Dachhaut nach wenigstens einem der Ansprüche 1 bis 10, dadurch gekennzeichnet, daß in das Tragprofil (6) U-Profile (30) zur Festlegung von Querstreben (31) eingesetzt sind.

Fig.1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 106 920 (116736(CANADA)INC) <br> * Figuren * <br> --- | 1 | A 01 G 9/14 |
| A | FR-A-2 305 122 (SERREBOUW DEFORCHE P.V.B.A.) <br> * Figur 1 * <br> --- | 1 | |
| A | US-A-2 691 352 (J.W. BOWDEN) <br> * Figur 8 * <br> --- | 1 | |
| D,A | EP-A-0 106 899 (LICENCIA TALALMANYOKAT ERTEKESITOE VALLALAT) <br> * Figuren * <br> ----- | 1 | |

RECHERCHIERTE
SACHGEBIETE (Int. Cl.4)

A 01 G     9/00
E 06 B     3/00

Der vorliegende Recherchenbericht wurde für alle Patentansprüche erstellt

| Recherchenort | Abschlußdatum der Recherche | Prüfer |
|---|---|---|
| BERLIN | 07-02-1989 | WUNDERLICH J E |

EPO FORM 1503 03.82 (P0403)